# EUROPÄISCHE PATENTANMELDUNG

(11) **EP 3 115 162 A1**
(43) Veröffentlichungstag der Anmeldung: **11.01.2017**
(21) Anmeldenummer: 15176257.2
(22) Anmeldetag: 10.07.2015
(51) Int. Cl.: B27D 1/00, B29C 45/14, B27N 3/06, B32B 21/08, B60R 13/02

(54) **Holzfurnier beschichteter kunststoffformkörper**

(71) Anmelder: Bond Laminates GmbH, 59929 Brilon (DE)
(72) Erfinder: DENTEL, Andy, 33098 Paderborn (DE); BAUDER, Jochen, 59929 Brilon (DE)
(74) Vertreter: Wichmann, Birgid

(57) **Zusammenfassung**

Die Erfindung betrifft einen Kunststoffformkörper enthaltend a) wenigstens einen Grundkörper (1) aus Faserverbundkunststoff und b) wenigstens ein Holzfurnier (21), welches wenigstens einen Oberflächenbereich des Kunststoffformkörpers (1) bildet oder bedeckt sowie ein Verfahren zur Herstellung eines Kunststoffformkörpers enthaltend a) wenigstens einen Grundkörper aus einem Faserverbundkunststoff (1) und b) wenigstens ein Holzfurnier (21), welches wenigstens einen Oberflächenbereich des Kunststoffformkörpers bildet oder bedeckt, wobei man i) wenigstens einen Grundkörper aus einem Faserverbundkunststoff (1) bereitstellt, ii) wenigstens ein Holzfurnier (21) bereitstellt, iii) den wenigstens einen Grundkörper (1) aufheizt, und iv) wenigstens einen Bereich des wenigstens einen Grundkörpers (1) mit dem wenigstens einen Holzfurnier (21) miteinander verbindet.

## Beschreibung

Die Erfindung betrifft einen Holzfurnier beschichteten Kunststoffformkörper sowie ein Verfahren zu dessen Herstellung in einem Druck- und/oder Temperatur-beaufschlagten Pressprozess.

Faserverbundkunststoffe sind vielfältig und flexibel einsetzbar und können durch die Wahl der Faserart und Faserstruktur sowie des Matrixwerkstoffs in ihren mechanischen Eigenschaften optimal an für ein jeweiliges Bauteil auftretende Lastfälle angepasst werden. Sie ermöglichen dabei zumeist gegenüber vielen anderen Werkstoffen gleicher Leistungsfähigkeit dünnere und/oder leichtere Bauteile.

In vielen Fällen weisen Faserverbundkunststoffe jedoch eine optisch wenig ansprechende Oberflächenqualität auf. In Kantenbereichen weisen Faserverbundkunststoffbauteile nach der Formgebung regelmäßig noch offene Kanten und/oder überstehende Fasern auf. Meist werden sie daher für nicht sichtbare Strukturbauteile verwendet oder müssen weiteren aufwändigen Bearbeitungsschritten unterzogen werden.

Bekannte Kombinationen von Furnieren und einem Grundkörper schließen meist in ihrer Wandstärke überdimensionierte Grundkörper ein und entsprechen damit nicht den Leichtbau-Anforderungen und dem Verlangen nach größerem Bauraum, zum Beispiel im Interieur Bereich von Automobilen.

Aufgabe der vorliegenden Erfindung ist es, einen Kunststoffformkörper mit einer ansprechenden Oberflächenqualität ausgestattet und maßvoll dimensioniert sowie ein Verfahren zu dessen Herstellung bereitzustellen.

Lösung der Aufgabe und Gegenstand der vorliegenden Erfindung ist ein Kunststoffformkörper enthaltend
a) wenigstens einen Grundkörper aus Faserverbundkunststoff und
b) wenigstens ein Holzfurnier, welches wenigstens einen Oberflächenbereich des Kunststoffformkörpers bildet oder bedeckt.

Zur Klarstellung sei angemerkt, dass alle aufgeführten, allgemeinen oder in Vorzugsbereichen genannten Definitionen und Parameter in beliebigen Kombinationen umfasst sind.

Die vorliegende Erfindung betrifft zudem ein Verfahren zur Herstellung eines Kunststoffformkörpers enthaltend
a) wenigstens einen Grundkörper aus einem Faserverbundkunststoff und
b) wenigstens ein Holzfurnier, welches wenigstens einen Oberflächenbereich des Kunststoffformkörpers bildet oder bedeckt,
indem man
i) wenigstens einen Grundkörper aus einem Faserverbundkunststoff bereitstellt,
ii) wenigstens ein Holzfurnier bereitstellt,
iii) den wenigstens einen Grundkörper aufheizt, und
iv) wenigstens einen Bereich des wenigstens einen Grundkörpers mit dem wenigstens einen Holzfurnier miteinander verbindet.

Mit dem erfindungsgemäßen Verfahren erhält man Kunststoffformkörper mit hervorragenden mechanischen Eigenschaften von Faserverbundkunststoffen und einer durch das Holzfurnier und dessen Design- und/oder Haptik-Merkmale verbesserten, ansprechenden Oberflächengestaltung. Überraschenderweise lassen sich trotz der hohen Verarbeitungstemperaturen Erzeugnisse herstellen, ohne dass das Holzfurnier durch Zersetzungsprozesse wie Verkohlung Schaden nimmt. Die erfindungsgemäßen Kunststoffformkörper eignen sich zum Einsatz in Technologien, wo es sowohl auf Leichtbau als auch auf ansprechende Ästhetik, insbesondere auf Basis von natürlichem Holz, ankommt, insbesondere für Kraftfahrzeuginnenaustattungen oder für die Möbelindustrie.

In einer Ausführungsform wird das Halbprodukt aus Verfahrensschritt iv) in einem zusätzlichen Verfahrensschritt v) wenigstens in einem Teilbereich umgeformt, vorzugsweise in wenigstens einem Formwerkzeug.

Das wenigstens eine Holzfurnier geht dabei unter Einwirken eines spezifischen Druck-, Temperatur- und Zeitprofils adhäsiv und/oder unter Stoffschluss eine haftfeste Verbindung zum Grundkörper ein und beschichtet diesen vollflächig oder zumindest in ausgewählten Bereichen mit den dekorativen Oberflächenmerkmalen von Holz, ohne selbst beschädigt zu werden.

Im Rahmen der vorliegenden Erfindung ist der Grundkörper vorzugsweise ein Endlosfaser- oder Langfaser verstärkter Thermoplast basierter Grundkörper. Vorzugsweise handelt es sich deshalb beim Erfindungsgegenstand um ein Thermoplast basiertes Halbzeug enthaltend
a) wenigstens einen Endlosfaser- oder Langfaser verstärkten Thermoplast basierten Grundkörper und
b) wenigstens ein Holzfurnier, welches wenigstens einen Oberflächenbereich des Endlosfaser- oder Langfaser verstärkten Thermoplast basierten Grundkörpers bildet oder bedeckt.

### Holzfurnier

Unter Holzfurnier wird ein aus wenigstens einer Holzschicht bestehendes dünnes Blatt, das durch Schälen, Messern, oder Sägen von einem Holzstamm abgetrennt wird (DIN 4079), verstanden. Eine andere Möglichkeit ist das Verleimen von Schnittholz-Lamellen zu einem Block, um diesen dann zu messern. DIN 68330 teilt Furniere nach Herstellungszweck und Verwendungszweck ein. Deckfurniere sind Furniere, die die Sichtfläche bilden. Sie werden in Außen- und Innenfurniere unterteilt. Außenfurniere bestimmen das Erscheinungsbild eines Produktes. Als Deckfurniere werden hochwertige Messer- oder Schälfurniere eingesetzt.

Erfindungsgemäß einzusetzende Holzfurniere weisen Stärken im Bereich von 0,1 bis 3 mm, vorzugsweise 0,1 bis 1 mm, besonders bevorzugt 0,1 bis 0,5 mm auf. Besonders sehr dünne Furniere, auch als Mikrofurniere mit einer Stärke im Bereich von 0.1 bis 0.3 mm bezeichnet, sind rissanfällig, was bei der Verarbeitung besondere Umsicht erfordert.

In einer Ausführungsform weist das erfindungsgemäß einzusetzende Holzfurnier auf einer Seite ein textiles Flächengebilde auf, wobei das textile Flächengebilde nach Herstellung des erfindungsgemäßen Kunststoffformkörpers für den Betrachter unsichtbar bleibt. Insbesondere erfindungsgemäß einzusetzende Mikrofurniere weisen einseitig zum Zwecke der besseren Handhabbarkeit und Stabilität einseitig ein textiles Flächengebilde auf. Zweidimensionale Verformungen des Holzfurniers, vorzugsweise durch Biegen, lassen sich auf diese Weise leichter frei von Rissen im Holzfurnier realisieren.

Dabei ist anzumerken, dass Holzfurniere die sparsamste Art der Holznutzung und die höchste Wertschöpfung dieses Naturstoffes darstellen. Jede Holzart besitzt charakteristische Merkmale und dekorative Besonderheiten. Die natürlichen Farben sind weitgefächert. Sie reichen von gelblich über weiß bis schwarz. Die optischen Eigenschaften von Holzfurnieren entsprechen im Allgemeinen denen von Vollholz. Beizen bieten die Möglichkeit der Abänderung des Farbtons, der Verstärkung des natürlichen Farbtons und der Erhöhung der Kontraste in der Holzmaserung der Furnieroberfläche. Auch komplettes Durchfärben wird im Bereich der Holzfurniere angewendet und hat den Vorteil, das die Holzfurniere auch schleifbar sind. Darüber hinaus können Holzfurniere mit Digitaldruck-Technik aufgewertet werden. Auch das Bedrucken mit Farben profilierten Walzen ist üblich. In einer Ausführungsform werden deshalb gefärbte Holzfurniere eingesetzt.

Holz ist ein hygroskopischer Werkstoff, der Wasser aufnehmen und abgeben kann. Entweder zum Schutz der Oberfläche des Holzfurniers vor externen Einflüssen wie Witterungseinflüssen, insbesondere vor Feuchtigkeit, oder im Zusammenhang mit einer erleichterten Nachbearbeitung kann in einer Ausführungsform der vorliegenden Erfindung das Holzfurnier auf einer Seite eine Lackierung oder Folierung aufweisen, wobei diese nach Herstellung des erfindungsgemäßen Kunststoffformkörpers für den Betrachter sichtbar bleibt. Eine solche schützende Folie kann auch vor dem Umformen aufgebracht werden.

Die europäische Eiche weist parallel zur Faserrichtung eine Festigkeit/ Steifigkeit von 71 MPa/ 12 GPa und senkrecht zur Faserrichtung eine Festigkeit/ Steifigkeit von 7,9 MPa/ 0,63 GPa auf. Durch die geschickte Anordnung der verstärkenden Fasern im erfindungsgemäß einzusetzenden Grundkörper kann eine zusätzliche Festigkeit und Steifigkeit quer zur Faserrichtung des Holzfurniers erreicht werden.

Bevorzugt umfasst das wenigstens eine Holzfurnier zumindest eine Holzschicht, jeglicher Holzart. Besonders bevorzugt wird ein Holzfurnier aus der Holzgruppe Ahorn, Birke, Tulpenholz, Kirschbaum, Esche, Buche, Walnuss, Eiche, Taba, Movingui, Bolivar, Carvalho, Madronamaser, Perpero, Aniegre, Platane, Mahagoni, Newood, Caleidolegno eingesetzt.. Eine solche Holzschicht stellt die einfachste Möglichkeit dar, ein Dekor zu verwirklichen. Die Holzschicht kann dabei naturbelassen, oder eingefärbt sein. Die Einfärbung kann vollflächig oder lediglich partiell vorliegen. Die Holzschicht kann sowohl optische als auch haptische Effekte erzeugen.

Vorzugsweise weist dabei die zumindest eine Holzschicht eine Schichtdicke im Bereich von 100 µm bis 1000 µm auf, bevorzugt im Bereich von 200 µm bis 600 µm besonders bevorzugt im Bereich von 200 µm bis 400 µm.

In einer weiteren bevorzugten Ausführungsform umfasst das Holzfurnier zumindest eine rückseitige textile Flächengebildelage, insbesondere aus einem Gewebe und/oder einem Gelege und/oder einer Matte und/oder einem Vlies und/oder Gewirke und/oder Geflechte und/oder unidirektional ausgerichtete Flächengebilde wie zum Beispiel UD-Tapes (UD = unidirektional). Die textilen Flächengebilde sind vorzugsweise sehr dünn und weisen Flächengewichte im Bereich von 20-100 g/m², besonders bevorzugt 30-70g/m² auf. Durch geschickte Anordnung der Flächengebildelage, zum Beispiel senkrecht zur Faserrichtung, kann das rissanfällige Holz des Holzfurniers zusätzlich stabilisiert werden, ohne seine Flexibilität vollständig zu verlieren.

### Grundkörper

Es ist weiter bevorzugt, wenn der wenigstens eine Grundkörper als plattenförmiges Halbzeug bereitgestellt wird. Solche plattenförmigen Halbzeuge, auch als Organobleche bezeichnet, können einfach auf die gewünschte Endkontur zugeschnitten werden, so dass wenig Material beim Zuschnitt verloren geht. Ferner sind Halbzeuge in Form von Plattenware besonders einfach in der Handhabung und deshalb bevorzugt. Organobleche sind leichte und steife Plattenhalbzeuge aus einer Kunststoffmatrix, in die Langfasern oder Endlosfasern, teilweise oder vollständig imprägniert, eingebettet sind. Organobleche sind Gegenstand umfangreicher Forschungen und werden beispielsweise in "Composites Technologien, Die Verarbeitung von FV-Thermoplasten, ETH Zürich IMES-ST, Kapitel 9, Version 3.0, Oktober 2004" beschrieben. Während die Fasern in Organoblechen maßgeblich die mechanischen Eigenschaften eines solchen Verbunds, wie Festigkeit und Steifigkeit, bestimmen, überträgt die Kunststoffmatrix aus wenigstens einem Kunststoff die Kräfte zwischen den Fasern, stützt die Fasern gegen Ausknicken und schützt sie vor äußeren Angriffen. Die Fasern können einerseits in nur eine Richtung orientiert sein (unidirektional, z.B. als Band [engl. "Tape"]), in zwei Richtungen rechtwinklig zueinander stehen (orthotrop oder balanciert), oder quasi-isotrop in jedem gewünschten Winkel zueinander platziert werden. Endlosfasern haben den Vorteil, dass sie sehr gestreckt mit hohem Orientierungsgrad und dadurch in größeren Mengen in die Kunststoffmatrix eingebracht werden können. Außerdem ermöglichen Sie den Kraftfluss zwischen Krafteinleitungspunkten innerhalb von Organoblechen allein über die Fasern, was die mechanische Leistungsfähigkeit eines Bauteils auf Basis eines solchen Organoblechs/Halbzeugs steigert. Vorzugsweise wird wenigstens ein Thermoplast als Kunststoff eingesetzt. Erfindungsgemäß vorzugsweise einzusetzende Organobleche werden von der Bond-Laminates GmbH, Brilon, Deutschland, unter dem Namen Tepex® vertrieben.

Vorzugsweise enthält der wenigstens eine Grundkörper zumindest eine Flächengebildelage aus Endlosfasern und/oder Langfasern und gegebenenfalls Kurzfasern in der Kunststoffmatrix, vorzugsweise in einer thermoplastischen Kunststoffmatrix.

Für die Langfasern oder Endlosfasern werden vorzugsweise anorganische Materialien, insbesondere silikatische oder nichtsilikatische Gläser, Kohlenstoff, Bor, Aramid, Siliciumcarbid, Metalle, Metalllegierungen, Metalloxide, Metallnitride, Metallcarbide und Silikate sowie organische Materialien, insbesondere natürliche oder synthetische Polymere, vorzugsweise Polyester, Polyamide und Naturfasern, insbesondere Baumwolle oder Cellulose sowie deren Kombinationen eingesetzt.

Vorzugsweise handelt es sich bei den einzusetzenden Verstärkungsfasern des Grundkörpers um wenigstens 10 mm lange bis endlose Verstärkungsfasern, wobei letztere als Einzelfasern Rovings, Stränge, Garne, Zwirne oder Seile vorliegen können.

Vorzugsweise weisen die als Verstärkungsfasern einzusetzenden einzelnen Filamente Durchmesser im Bereich von 0,5 µm bis 25 µm auf.

Unter endlosen Verstärkungsfasern werden solche verstanden, die im Allgemeinen eine Länge von über 50 mm aufweisen, im Speziellen aber solche, deren Länge etwa der Längenausdehnung der jeweiligen Verbundwerkstoffe entspricht.

In einer Ausführungsform können aber auch Kombinationen verschiedener Fasermaterialien eingesetzt werden.

Die erfindungsgemäß einzusetzenden Flächengebildelagen verleihen dem wenigstens einen Grundkörper die gewünschten mechanischen Eigenschaften. Sie können in ihrer Struktur an zu erwartende Belastungen des Kunststoffformkörpers angepasst werden, so dass der Grundkörper die für reale Lastfälle optimale Festigkeit und/oder Steifigkeit aufweist.

Die Flächengebildelagen bilden dabei keine von der Kunststoffmatrix separaten Schichten aus, sondern werden von dieser durchdrungen, so dass Fasern und Kunststoff ein integrales Bauteil bilden.

Insbesondere ist es vorteilhaft, wenn die zumindest eine Flächengebildelage ein Gewebe und/oder ein Gelege und/oder eine Matte und/oder ein Vlies aus Glasfasern und/oder Carbonfasern und/oder Aramidfasern und/oder Naturfasern ist oder umfasst, vorzugsweise aus Glasfasern.

Je nach Anwendungsfall können unterschiedliche Fasermaterialen und unterschiedliche Typen von Flächengebildelagen frei miteinander kombiniert werden, um eine jeweils optimierte Struktur des Kunststoffformkörpers zu schaffen.

Bevorzugt weist dabei die zumindest eine Flächengebildelage ein Flächengewicht im Bereich von 5 g/m² bis 3000 g/m², bevorzugt im Bereich von 100 g/m² bis 900 g/m², besonders bevorzugt im Bereich von 150 g/m² bis 400 g/m² auf.

Weiterhin ist es vorteilhaft, wenn der Grundkörper maximal 100 Flächengebildelagen, bevorzugt 2 bis 40 Flächengebildelagen, besonders bevorzugt 2 bis 10 Flächengebildelagen, aufweist.

Auch hier erfolgt die Wahl der Anzahl der Flächengebildelagen nach den zu erwartenden Lastfällen und nach der gewünschten Schichtdicke des Grundkörpers.

Zweckmäßig ist es dabei, wenn der wenigstens eine Grundkörper eine Materialstärke im Bereich von 0,05 mm bis 6 mm, bevorzugt im Bereich von 0,1 mm bis 2 mm, besonders bevorzugt im Bereich von 0,3 mm bis 1,0 mm, mit einem Faservolumengehalt im Bereich von 25% bis 85%, bevorzugt im Bereich von 35% bis 65%, besonders bevorzugt im Bereich von 45% bis 55% aufweist.

Die Kunststoffmatrix des Grundkörpers für den erfindungsgemäßen Kunststoffformkörper enthält als wesentlichen Bestandteil wenigstens einen Kunststoff, vorzugsweise wenigstens einen Thermoplasten. Bevorzugt wird wenigstens ein Thermoplast aus der Gruppe der Polyolefine, Vinylpolymerisate, Polyacrylate, Polyamide, Polyurethane, Polyharnstoffe, Polyimide, Polyester, Polyether, Polystyrole, Polyhydantoine, Polyphenylenoxide (PPO), Polyarylensulfide, Polysulfone, Polycarbonate (PC), Polyphthalamide (PPA), Polymethylmethacrylate (PMMA), Styrolacrylnitrile (SAN), TPO (Thermoplastische Elastomere auf Olefinbasis), TPU (Thermoplastische Polyurethane) und Polyoxymethylene (POM) ausgewählt.

Bevorzugte Vinylpolymerisate sind auszuwählen aus der Gruppe Polyvinylhalogenide, Polyvinylester und Polyvinylether.

Bevorzugte Polyamide sind auszuwählen aus der Gruppe PA 66, PA 6 und PA 12. Die im Rahmen der vorliegenden Anmeldung benutzte Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl angegeben, wie im Falle des PA6, so bedeutet dies, dass von einer α,ω- Aminocarbonsäure bzw. von dem davon abgeleiteten Lactam, im Falle des PA6 also dem ε-Caprolactam, ausgegangen worden ist; im Übrigen sei verwiesen auf H. Domininghaus, Die Kunststoffe und ihre Eigenschaften, Seiten 272 ff., VDI-Verlag, 1976.

Besonders bevorzugt wird wenigstens ein Thermoplast aus der Gruppe PA 66, PA 6, PA 12, PPA, Polypropylen (PP), Polyphenlyensulfid (PPS), TPU und PC für die Kunststoffmatrix des Faserverbundkunststoffs ausgewählt.

Ganz besonders bevorzugt wird wenigstens ein Thermoplast aus der Gruppe TPU, PA 6 und PC ausgewählt, insbesondere bevorzugt PA 6.

Insbesondere bevorzugt wird wenigstens ein Thermoplast in flammgeschützter Form für die Kunststoffmatrix des Faserverbundkunststoffs eingesetzt. Erfindungsgemäß bevorzugte Flammschutzmittel für Polyamid basierte Organobleche werden in dem Schutzrecht mit der EP-Anmeldenummer 15159823.2 beschrieben. Erfindungsgemäß bevorzugte Flammschutzmittel für Polycarbonat basierte Organobleche werden im Schutzrecht mit der EP-Anmeldenummer 14193396.0 beschrieben. Erfindungsgemäß bevorzugte Flammschutzmittel für TPU basierte Organobleche werden in der WO 2013/087733 A2 beschrieben. Die im Organoblech einzusetzenden Thermoplaste können auch in verschiedensten Kombinationen miteinander eingesetzt werden, bevorzugt wird eine Kombination von PC/ ABS eingesetzt.

In einer bevorzugten Ausführung ist der wenigstens eine Grundkörper von wenigstens einer Schicht überzogen, insbesondere wenigstens einer faserfreien Kunststoffschicht und/oder wenigstens einer Schicht, die elektrische Funktionen ermöglicht. Elektrische Funktionen im Sinne der vorliegenden Erfindung sind insbesondere Abschirmung vor elektromagnetischer Strahlung, elektrische Leitung oder das Empfangen elektromagnetischer Signale.

Durch das Überziehen des wenigstens einen Grundkörpers mit wenigstens einer Schicht können die Eigenschaften des erfindungsgemäßen Kunststoffformkörpers weiter angepasst werden. Weitere Kunststoffschichten können die mechanischen Eigenschaften des Grundkörpers und somit des erfindungsgemäßen Kunststoffformkörpers insgesamt optimieren. Funktionsschichten können zusätzliche Funktionen, insbesondere elektronischer oder optischer Art, in den Grundkörper einbringen.

Vorzugsweise enthält die wenigstens eine Überzugsschicht denselben Kunststoff, wie der wenigstens eine Grundkörper. Vorzugsweise enthalten Grundkörper und Überzugsschicht denselben Thermoplasten.

In einer besonders einfachen Ausführungsform kann der Grundkörper selbst als Kleberschicht dienen, wenn unter Nutzung von im erfindungsgemäßen Verfahren bzw. Verarbeitungsprozess vorhandener bzw. eingebrachter Wärme der Kunststoff des Grundkörpers verflüssigt / aufgeschmolzen wird und die Verbindung zwischen Grundkörper und wenigstens einer zusätzlichen Schicht hergestellt wird.

### Bevorzugte Ausführungsformen des Verfahrens

In einer Ausführungsform wird in Verfahrensschritt i) des erfindungsgemäßen Verfahrens der Grundkörper als Rollenware bereitgestellt. Vorzugsweise wird in diesem Fall im Verfahrensschritt ii) auch das Holzfurnier als Rollenware bereitgestellt.

Die Bereitstellung des Holzfurniers als Rollenware vereinfacht die Handhabung des Holzfurniers, da vorzugsweise auf die Verwendung von separaten Greifwerkzeugen oder dergleichen zum Aufbringen des Holzfurniers auf den Grundkörper verzichtet werden kann. Dies ermöglicht eine Verkürzung der Handlinganteile an der Herstellzeit des erfindungsgemäßen Kunststoffformteils. Zudem ist es von Vorteil, dass das Holzfurnier von Ab- und Aufwickler der Rolle schadenfrei und erforderlichenfalls registergenau bzw. lagegenau positioniert gehalten werden kann.

In einer alternativen oder bevorzugten Ausführungsform wird das Holzfurnier vor dem Umformen durch Stanzen oder Ausschneiden bearbeitet. Dabei kann das Holzfurnier ganz durchtrennt und im Zweidimensionalen auf eine in der Endform gewünschte Kontur gebracht werden. Alternativ kann das Holzfurnier auch lediglich perforiert werden und erst im Formwerkzeug ganz durchtrennt werden.

Vorzugsweise wird das Holzfurnier vor dem Umformen auf den Grundkörper kontinuierlich aufgebracht durch leichtes Anschmelzen des Grundkörpers in einem Temperaturbereich von 0°C bis 50°C, bevorzugt um einen Temperaturbereich von 10°C bis 30°C, höher ist, als der Schmelzpunkt bzw. die Glasübergangstemperatur des für die Matrix des Grundkörpers eingesetzten Kunststoffs.

Dies ist insbesondere vorteilhaft, wenn das Holzfurnier zunächst auf die gewünschte Form zugestanzt wird. Erfolgt das Aufbringen des Holzfurniers auf den Grundkörper vor dessen Aufheizen, so kann der Aufheizschritt zudem genutzt werden, um eine adhäsive oder stoffschlüssige Verbindung zwischen dem Holzfurnier und dem Grundkörper herzustellen, die sich während eines Abkühlens des herzustellenden Kunststoffformteils im Formwerkzeug verfestigt. Bei einem derart vorfixierten Holzfurnier kann auf separate Halteelemente für das Holzfurnier im Formwerkzeug verzichtet werden, so dass sich die Handhabung von Holzfurnier und Grundkörper vereinfacht bzw. die Beschichtung des wenigstens einen Grundkörpers mit einem Holzfurnier auch ohne speziell für das Holzfurnierhandling ausgestatteten Formwerkzeug möglich ist.

Bevorzugt wird der wenigstens eine Grundkörper durch Infrarotbestrahlung, Kontaktheizung, in einem Umluftofen oder innerhalb des Formwerkzeugs aufgeheizt. Hierdurch wird einfach und energieeffizient eine gleichmäßige Aufheizung des Grundkörpers sichergestellt. Insbesondere bei einer Infrarotbestrahlung und Nutzung eines bereits auf einen Grundkörper aufkaschierten Holzfurniers wird der Grundkörper vorzugsweise einseitig auf der dem Holzfurnier abgewandten Seite aufgeheizt, um Beschädigungen des Holzes durch Wärmeeinwirkung zu verhindern.

Vorzugsweise wird der wenigstens ein Grundkörper vor dem Schließen des Formwerkzeugs aufgeheizt. Das Aufheizen erfolgt dabei entweder im Formwerkzeug oder außerhalb des Formwerkzeugs, vorzugsweise im Formwerkzeug.

Vorzugsweise wird der wenigstens eine Grundkörper sowohl bei der Verbindung mit dem wenigstens einen Holzfurnier, als auch bei der späteren gemeinsamen Umformung, auf eine Temperatur aufgeheizt, die um einen Temperaturbereich von 0°C bis 100°C, bevorzugt um einen Temperaturbereich von 10°C bis 50°C, höher ist, als der Schmelzpunkt bzw. die Glasübergangstemperatur des für die Matrix des Grundkörpers eingesetzten Kunststoffs. Dies ermöglicht eine zuverlässige Umformung des Grundkörpers im nachfolgenden Verfahrensschritt v) und ein gleichmäßiges Fließen der erweichten Kunststoffmatrix.

Vorzugsweise wird der wenigstens eine Grundkörper auf eine Temperatur im Bereich von 100°C bis 300°C, besonders bevorzugt auf eine Temperatur im Bereich von 160°C bis 280°C, insbesondere bevorzugt auf eine Temperatur im Bereich von 200°C bis 250°C aufgeheizt.

Die genauen Temperaturen richten sich dabei nach den jeweiligen Kunststoffen, vorzugsweise Thermoplasten, in der Kunststoffmatrix des wenigstens einen Grundkörpers.

Bevorzugt wird im erfindungsgemäßen Verfahren wenigstens ein Formwerkzeug mit einer ersten Werkzeughälfte und wenigstens einer zweiten Werkzeughälfte eingesetzt, zwischen denen im geschlossenen Zustand wenigstens eine Kavität ausgebildet ist, welche komplementär zu einer Form des als Produkt/Erzeugnis erhältlichen Kunststoffformkörpers ist. Dabei kann zumindest ein der Kavität zugewandter Oberflächenbereich des Formwerkzeugs beim Schließen des Formwerkzeugs als Umformfläche zum Umformen wenigstens eines in das Werkzeug eingelegten Grundkörpers und wenigstens eines in das Werkzeug eingelegten Holzfurniers ausgebildet sein.

Ferner ist es vorteilhaft, wenn der wenigstens eine Grundkörper und das wenigstens eine Holzfurnier durch hydraulische, pneumatische oder elektrische Druckbeaufschlagung zwischen zwei Werkzeughälften des Formwerkzeugs zumindest bereichsweise miteinander verbunden werden. Hierdurch wird eine exakte Kontrolle von Druck und Umformgrad während des Umformvorgangs ermöglicht, so dass ein Kunststoffformkörper mit hoher Material- und Oberflächenqualität erhalten wird.

Es ist weiter bevorzugt, wenn das Formwerkzeug temperiert wird. Dies vermeidet ein vorschnelles Abkühlen des Grundkörpers insbesondere während des Umformens, welches zu schlechten Umformergebnissen führen könnte.

Dabei ist es bevorzugt, wenn wenigstens ein Formwerkzeug isotherm auf eine Temperatur von 40°C bis 180°C, bevorzugt von 70°C bis 150°C, weiter bevorzugt von 80°C bis 120°C beheizt wird.

Alternativ kann das Formwerkzeug variotherm temperiert werden, insbesondere mit einer Temperaturführung in einem Bereich von 0K bis 250K unter Schmelztemperatur eines als Matrix des Grundkörpers einzusetzenden Kunststoffs, mit einem Aufheiz- oder Abkühlgradienten von 1 K/s bis 30K/s.

Der wenigstens eine Grundkörper wird mit dem wenigstens einen Holzfurnier durch die beim Aufheizen eingebrachte Wärme in Kombination mit einer Druckbeaufschlagung verbunden, so dass vorteilhafterweise auf eine separate Verbindungsschicht, insbesondere Klebeschicht, zwischen den zwei Komponenten verzichtet werden kann.

Vorzugsweise erfolgt die Verbindung von Holzfurnier und Grundköper im Verfahrensschritt iv) kontinuierlich.

Ergebnis des Verfahrensschritt iv) mit variothermer Temperaturführung ist ein mit dem Matrixwerkstoff imprägniertes Holzfurnier, was eine weiterführende Nachbearbeitung, wie etwa eine Lackierung oder Folierung erleichtern kann.

Vorzugsweise erfolgt in Verfahrensschritt iv) das Verbinden zusammen mit Verfahrensschritt v) dem Umformen in wenigstens einem Formwerkzeug. Besonders bevorzugt wird hierfür nur ein Formwerkzeug eingesetzt.

Unter Umformen oder Formen (Verfahrensschritt v)) wird im Folgenden unabhängig von einer makroskopischen Formgebung auch jegliche Art der Bewegung von Kunststoffmatrix im Faserverbundkunststoff verstanden, die über den Zweck der Formgebung eines zwei- oder dreidimensionalen Kunststoffformteils hinaus erforderlich ist, um dieses mit verbesserten Oberflächeneigenschaften zu versehen. Die Matrixbeweglichkeit wird dabei durch eine sich nach dem jeweiligen Matrixkunststoff des Faserverbundkunststoffs richtende Temperatureinwirkung und/oder Druckbeaufschlagung geschaffen, beruhend darauf, dass die Kunststoffmatrix in einen fließfähigen und damit formbaren Zustand gebracht wird.

Bei dieser Variante kann die Temperaturführung an den Umformprozess angepasst werden, so dass Schwindung und Verzug oder eine Verschlechterung der Oberflächenqualität, insbesondere durch ungleichmäßige Schrumpfung bzw. Schwindung oder Ausdehnung des Kunststoffformteils, vermieden werden können.

Besonders bevorzugt ist es, wenn in einem weiteren Schritt vi) zumindest eine Kunststoffstruktur an den Kunststoffformkörper durch Spritzgießen vollflächig, partiell oder umlaufend angeformt wird. Das Spritzgießen kann dabei ein Hinterspritzen und/oder Anspritzen und/oder Umspritzen sein oder umfassen. Hierdurch können Strukturen oder Strukturelemente verwirklicht werden, die allein durch die Umformung des Grundkörpers nicht geschaffen werden können, da entweder der notwendige Umformgrad nicht erreicht werden kann, oder da entsprechende Hinterschnitte nicht durch Umformen zu erzielen sind.

Ferner ist es so möglich, Kantenbereiche des wenigstens einen Grundkörpers zu umspritzen, so dass freiliegende bzw. erst durch das Umformen freigelegte anorganische oder organische Verstärkungsfasern von der Kunststoffstruktur eingeschlossen werden können. Hierdurch wird ein Kunststoffformkörper mit besonders glatten Kanten bereitgestellt.

In einer Ausführungsform kann zudem in einem Verfahrensschritt vi) ein Teilbereich der Kavität des Formwerkzeugs als Formhohlraum zum vollflächigen Hinterspritzen mit einer oder mehreren Kunststoffmassen oder zum Anspritzen zumindest eines Kunststoffelements an den umgeformten Grundkörper oder zum Umspritzen von zumindest eines Randbereichs des umgeformten Grundkörpers ausgebildet sein.

Besonders bevorzugt ist es, wenn das Spritzgießen für das Hinterspritzen oder das Umspritzen im Formwerkzeug erfolgt. Vorzugsweise werden die Verfahrensschritte v) und vi) in diesem Fall kombiniert oder zeitgleich durchgeführt.

Es ist bevorzugt, wenn das Spritzgießen im Verfahrensschritt vi) bei einer Temperatur im Bereich von 200°C bis 320°C, bevorzugt im Bereich von 240°C bis 290°C, weiter bevorzugt im Bereich von 240°C bis 270°C, erfolgt.

Ferner ist es vorteilhaft, wenn das Spritzgießen bei einem Druck im Bereich von 10 bar bis 2000 bar, bevorzugt im Bereich von 200 bar bis 1500 bar, weiter bevorzugt im Bereich von 500 bar bis 1300 bar, erfolgt.

Druck und Temperatur des Spritzgussvorgangs richten sich dabei nach der Art der verwendeten Kunststoffmasse, sowie nach der Geometrie der zu erzeugenden Kunststoffstruktur.

Hierdurch kann auf ein zusätzliches Spritzgusswerkzeug verzichtet werden. Dies verringert sowohl den apparativen Aufwand als auch die Herstellungszeit und die Herstellungskosten.

Alternativ ist es weiterhin möglich, dass das Spritzgießen in einem separaten Spritzgusswerkzeug erfolgt.

Bei dieser Variante können beispielsweise bestehende Spritzgusswerkzeuge weiter verwendet werden.

Es ist ferner bevorzugt, wenn der Kunststoffformkörper nach dem Umformen und/oder nach dem Spritzgießen auf eine Temperatur im Bereich von 150°C bis 0°C abgekühlt wird, insbesondere mit einer Abkühlrate von 1 K/s bis 30K/s.

Hierdurch wird eine kontrollierte Erstarrung der angespritzten Kunststoffstruktur bzw. des gesamten Kunststoffformkörpers erzielt, so dass Verzüge oder dergleichen beim Abkühlen vermieden werden.

In einer besonders bevorzugten Ausführungsform umfasst der Kunststoffformkörper zumindest eine Kunststoffstruktur, die aus mechanischen Stabilitätsgründen vollflächig hinterspritzt oder zur Funktionsintegration spezifischer Kunststoffelemente partiell angespritzt oder auch zur Glättung und/oder zumindest bereichsweisen Versiegelung von Randbereichen umspritzt sein kann. Vorzugsweise wird hierfür derselbe Kunststoff, insbesondere Thermoplast, eingesetzt, der als wesentliche Komponente im Grundkörper enthalten ist. Hierdurch kann eine feste Verbindung zwischen der anzuspritzenden Kunststoffstruktur und dem Grundkörper sichergestellt werden.

Alternativ kann ein Thermoplast eingesetzt werden, der dazu geeignet ist, eine haftfeste Verbindung mit zumindest einem der im Grundkörper enthaltenen Thermoplasten einzugehen. Es kann sich in einer weiteren Ausführungsform von Vorteil erweisen, wenn die Kunststoffstruktur mit mindestens zwei Thermoplasten unterschiedlicher Eigenschaften mittels Spritzgussverfahren durch Kombination der vorgenannten Techniken Hinterspritzen, Anspritzen und Umspritzen, beispielsweise zur Realisierung einer unterschiedlichen Einfärbung bestimmter Bereiche des Kunststoffformkörpers oder zur Integration zusätzlicher Dichtelemente am Kunststoffformkörper, hergestellt wird.

Bevorzugt für den Spritzguss einzusetzende Thermoplasten werden ausgewählt aus der Gruppe der Polyolefine, Vinylpolymerisate, Polyacrylate, Polyamide, Polyurethane, Polyharnstoffe, Polyimide, Polyester, Polyether, Polystyrole, Polyhydantoine, Polyphenylenoxide, Polyarylensulfide, Polysulfone, Polycarbonate, PMMA, SAN, TPO, TPU und POM.

Bevorzugte Vinylpolymerisate sind auszuwählen aus der Gruppe Polyvinylhalogenide, Polyvinylester, Polyvinylether.

Bevorzugte Polyamide sind auszuwählen aus der Gruppe PA 66, PA 6 und PA 12.

Besonders bevorzugt wird wenigstens ein Thermoplast aus der Gruppe PA66, PA 6, PA 12, PPA, PP, PPS, TPU und PC für den Spritzguss ausgewählt.

Ganz besonders bevorzugt wird wenigstens ein Thermoplast aus der Gruppe TPU, PA 6 und PC für den Spritzguss ausgewählt.

Weiterhin ist es bevorzugt, wenn der Kunststoff für den Spritzguss Zuschlagstoffe, insbesondere Glas-, Carbon- oder Naturfasern mit bevorzugten Füllgraden im Bereich von 20 m% bis 60 m% (m% = Massenprozent), Kupfer, Aluminiumoxid, Graphit, Mittel zur Verbesserung der Fließfähigkeit, UV-Stabilisatoren, Flammschutzmittel, Schaumbildner, Mittel zur Ableitung statischer Aufladung oder zur Ausbildung elektrischer Leitfähigkeitspfade enthält.

Solche Zuschlagstoffe können der durch Spritzguss dem erfindungsgemäßen Kunststoffformkörper hinzuzufügenden Kunststoffstruktur zusätzliche visuelle, mechanische, chemische oder funktionale Eigenschaften verleihen.

Es ist weiter bevorzugt, wenn die zumindest eine, durch Spritzguss dem erfindungsgemäßen Kunststoffformkörper hinzuzufügende Kunststoffstruktur, einen oder mehrere Kantenbereiche des wenigstens einen Grundkörpers umschließt.

Hierdurch können überstehende bzw. durch das Umformen freigelegte Fasern des wenigstens einen Grundkörpers in der Kunststoffstruktur eingeschlossen werden, so dass sich eine glatte, optisch und taktil ansprechende Kante des Kunststoffformkörpers ergibt.

Weiterhin ist es bevorzugt, wenn die zumindest eine, durch Spritzguss dem erfindungsgemäßen Kunststoffformkörper hinzuzufügende, Kunststoffstruktur Verstärkungselemente, insbesondere Rippenkörper oder Dome, und/oder Befestigungselemente, insbesondere Clipse, Rasthaken, Schnapphaken, Konsolen, Schrauböffnungen, Rastöffnungen, Federn, Nuten oder dergleichen, umfasst.

Dies ermöglicht in vorteilhafter Weise die Verbindung des erfindungsgemäßen Kunststoffformkörpers mit weiteren Bauteilen, ohne dass separate Befestigungsmittel erforderlich sind und/oder trägt weiter zur mechanischen Stabilisierung des Kunststoffformkörpers bei.

Es ist weiter bevorzugt, wenn zumindest eine Werkzeughälfte des Spritzgusswerkzeugs zumindest einen Angusskanal zum Einspritzen einer Spritzgussmasse in den Formhohlraum aufweist.

Dabei handelt es sich vorzugsweise um einen Heißkanal oder Kaltkanal. In einem Kaltkanal erstarrt die Spritzmasse und muss zusammen mit dem fertigen Kunststoffformkörper entnommen werden und anschließend oder bereits bei der Entnahme von diesem abgetrennt werden. In einem Heißkanal wird die spritzgussfähige Kunststoffmasse erhitzt, so dass sie nicht erstarrt und bei der Entnahme des Kunststoffformkörpers im Werkzeug verbleibt. Dabei kann auf ein späteres Abtrennen des Angusssystems vom Kunststoffformkörper bzw. Erzeugnis verzichtet werden. Allerdings ist diese Lösung apparativ aufwendiger und benötigt gegebenenfalls zusätzliche Ventile im Angusssystem.

Es ist ferner vorteilhaft, wenn zumindest eine Werkzeughälfte des Formwerkzeugs eine Temperiervorrichtung, insbesondere wenigstens einen Temperiermittelkanal und/oder wenigstens eine elektrische Temperiervorrichtung, zum Temperieren der in die Kavität eingebrachten Materialien umfasst. Hierdurch kann die Temperatur des Grundkörpers während des Umformens und/oder die Temperatur der Kunststoffmasse während des Spritzgießens passend beeinflusst werden, so dass ein vorzeitiges Abkühlen vermieden und eine besonders gute Umform- und Urformqualität erzielt wird.

In einer weiteren bevorzugten Ausführungsform umfasst zumindest eine Werkzeughälfte des Formwerkzeugs zumindest einen Schieber, welcher relativ zum Formhohlraum beweglich und in diesen einführbar ist. Hierdurch können Hinterschnitte in der angespritzten Kunststoffstruktur des erfindungsgemäßen Kunststoffformteils verwirklicht werden.

Weiter ist es bevorzugt, wenn zumindest eine Werkzeughälfte des Formwerkzeugs zumindest ein Auswerferelement, insbesondere einen Auswerferstift, zum Auswerfen des fertigen Kunststoffformteils umfasst. Dies ermöglicht ein einfaches Entfernen des fertigen Kunststoffformteils aus dem Formwerkzeug.

### Es ist ferner zweckmäßig, wenn das Formwerkzeug eine elektrische, hydraulische oder pneumatische Pressvorrichtung umfasst, mittels welcher die Werkzeughälften gegeneinander bewegbar und aneinander anpressbar sind.

Vorteilhafterweise sind die einzelnen Kraft erzeugenden Elemente der Pressvorrichtung separat steuerbar. Hierdurch kann die Relativbewegung der Werkzeughälften exakt gesteuert werden und der Anpressdruck während des Umformens genau kontrolliert werden.

Weiter ist es bevorzugt, wenn Entformungsschrägen des Formwerkzeugs im Bereich der Umformflächen einen Winkel von mehr als 2° aufweisen.

Es ist dabei auch zweckmäßig, wenn Innenradien des Formwerkzeugs im Bereich der Umformflächen größer als eine Dicke des Grundkörpers sind.

Ferner sind die Außenradien des Formwerkzeugs im Bereich der Umformflächen bevorzugt größer als die Summe der Innenradien des Formwerkzeugs im Bereich der Umformflächen und der Dicke des Grundkörpers.

Es ist ebenfalls vorteilhaft, wenn die Entformungsschrägen des Formwerkzeugs im Bereich des Formhohlraums einen Winkel von mehr als 0,5° aufweisen. Durch diese geometrischen Parameter wird ein problemloses Entformen des gefertigten Kunststoffformkörpers ermöglicht.

Die vorliegenden Erfindung betrifft aber auch Erzeugnisse, vorzugsweise Kraftfahrzeuginnenausstattungen oder Möbel, enthaltend wenigstens einen erfindungsgemäßen Kunststoffformkörper.

Die Erfindung wird nun anhand von Ausführungsbeispielen näher erläutert. Es zeigen
- Fig. 1: Eine schematische Schnittdarstellung eines Grundkörpers (1) aus nur einer Flächengebildelage zur Herstellung eines Ausführungsbeispiels eines Kunststoffformkörpers;
- Fig. 2: Eine schematische Schnittdarstellung eines Holzfurniers (2) zur Herstellung eines Ausführungsbeispiels eines Kunststoffformkörpers;
- Fig. 3: Eine schematische Schnittdarstellung eines Ausführungsbeispiels eines Kunststoffformkörpers mit einem Grundkörper nach Fig. 1 und eines Holzfurniers nach Fig. 2;
- Fig. 4: Eine schematische Darstellung des Verfahrensschrittes eines Ausführungsbeispiels eines Verfahrens zur Herstellung eines Holzfurnier beschichteten Kunststoffformkörpers;
- Fig. 5: Eine schematische Darstellung des Verfahrensschrittes eines Ausführungsbeispiels eines Verfahrens zum externen Aufheizen eines Holzfurnier beschichteten Kunststoffformkörpers;
- Fig. 6: Eine schematische Darstellung der Verfahrensschritte eines Ausführungsbeispiels eines Verfahrens zur Herstellung eines Kunststoffformkörpers;
- Fig. 7: Eine schematische Darstellung der Verfahrensschritte eines weiteren alternativen Ausführungsbeispiels eines Verfahrens zur Herstellung eines Kunststoffformkörpers.

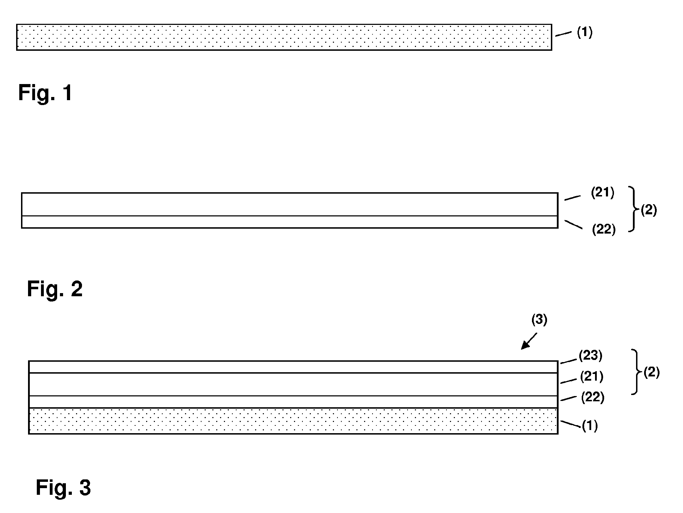

Zur Herstellung eines Holzfurnier-beschichteten, faserverstärkten Kunststoffformkörpers wird zunächst wenigstens ein Grundkörper (1) gemäß Fig. 1 aus einem Langfaser- oder Endlosfaser-verstärkten Kunststoff bereitgestellt. Der wenigstens eine Grundkörper (1) umfasst wenigstens eine Flächengebildelage aus Endlosfasern und/oder Langfasern in einer Kunststoffmatrix, vorzugsweise einer thermoplastischen Kunststoffmatrix.

Solche Flächengebildelagen verleihen dem wenigstens einen Grundkörper (1) die gewünschten mechanischen Eigenschaften. Sie können in ihrer Struktur an zu erwartende Belastungen des Kunststoffformkörpers angepasst werden, so dass dieser die für reale Lastfälle optimale Festigkeit und/oder Steifigkeit aufweist.

Die Flächengebildelagen bilden dabei keine von der Kunststoffmatrix separaten Schichten aus, sondern werden von dieser durchdrungen, so dass Fasern und Kunststoff ein integrales Bauteil, ein sogenanntes Organoblech, bilden.

Insbesondere ist es vorteilhaft, wenn die wenigstens eine Flächengebildelage ein Gewebe und/oder ein Gelege und/oder eine Matte und/oder ein Vlies aus Glasfasern und/oder Carbonfasern und/oder Aramidfasern und/oder Naturfasern ist oder umfasst.

Je nach Anwendungsfall können unterschiedliche Fasermaterialen und unterschiedliche Typen von Flächengebildelagen frei miteinander kombiniert werden, um eine jeweils optimierte Struktur des Kunststoffformkörpers zu schaffen.

Bevorzugt weist dabei die wenigstens eine Flächengebildelage ein Flächengewicht von 5 g/m² bis 3000 g/m², bevorzugt von 100 g/m² bis 900 g/m², besonders bevorzugt von 150 g/m² bis 400 g/m² auf.

Weiterhin ist es vorteilhaft, wenn der wenigstens eine Grundkörper maximal 100 Flächengebildelagen, bevorzugt 2 bis 40 Flächengebildelagen, besonders bevorzugt 2 bis 10 Flächengebildelagen, aufweist.

Auch hier erfolgt die Wahl der Anzahl der Flächengebildelagen nach den zu erwartenden Lastfällen und nach der gewünschten Schichtdicke des Grundkörpers (1).

Vorzugsweise besitzen die verwendeten Faserlagen dasselbe Flächengewicht und sind aus derselben Faserart. Es können aber auch Kombinationen von verschiedenen Fasermaterialien eingesetzt werden. Bevorzugte Fasermaterialien sind silikatische und nichtsilikatische Gläser verschiedenster Art, Kohlenstoff, Bor, Siliciumcarbid, Metalle, Metalllegierungen, Metalloxide, Metallnitride, Metallcarbide und Silikate sowie verschiedene organische Materialien, vorzugsweise natürliche oder synthetische Polymere, vorzugsweise Polyacrylnitride, Polyester, ultrahochgereckte Polyolefinfasern, Polyamide, Polyimide, Aramide, Liquid-Crystal-Polymere, Polyphenylensulfide, Polyetherketone, Polyetheretherketone, Polyetherimide, Baumwolle und Cellulose.

In einer Ausführungsform werden Kohlenstofffaser-Gewebe in den Außenlagen und Glasfaserlagen in den Mittellagen kombiniert. Darüber hinaus ist auch eine Kombination von Lagen unterschiedlicher Flächengewichte möglich. Im Falle solcher Verbunde aus gemischten Geweben oder gemischten Flächengewichten ist eine Mittensymmetrie sehr wichtig. Mittensymmetrie im Sinne der vorliegenden Erfindung bedeutet, dass die einzelnen Lagen so dimensioniert und angeordnet sind, dass die ggf. unterschiedlichen mechanischen Eigenschaften sowie das temperaturbedingt ggf. unterschiedliche Dehnungs- und Schrumpfverhalten der einzelnen Lagen nicht dazu führen, dass ein flach in einer Ebene hergestellter Kunststoffformkörper sich durch Temperatureinwirkung verzieht und uneben wird bzw. bei Biegebelastung eines aus den erfindungsgemäßen Kunststoffformkörpern herzustellenden Erzeugnisses eine biegerichtungsabhängig unterschiedliche Stabilität entlang derselben Biegeachse gemessen werden könnte. Zweckmäßig ist es dabei, wenn der wenigstens eine Grundkörper (1) eine Materialstärke im Bereich von 0,05 mm bis 6 mm, bevorzugt im Bereich von 0,1 mm bis 2 mm, besonders bevorzugt im Bereich von 0,5 mm bis 1,5 mm, mit einem Faservolumengehalt im Bereich von 25% bis 85%, bevorzugt im Bereich von 35% bis 65%, besonders bevorzugt im Bereich von 45% bis 55% aufweist.

Bevorzugt wird wenigstens ein Thermoplast in flammgeschützter Form für die Kunststoffmatrix des Faserverbundkunststoffs eingesetzt. Die Thermoplaste können auch in verschiedensten Kombinationen miteinander eingesetzt werden, bevorzugt wird eine Kombination von PC/ ABS eingesetzt. Auch Kombinationen der genannten Kunststoffe können Anwendung finden.

Vor der Weiterverarbeitung wird der Grundkörper (1) imprägniert und konsolidiert. Die Imprägnierung bezeichnet das vollständige Benetzen aller Fasern und die Konsolidierung bezeichnet das Exprimieren von eingeschlossener Luft über die Schmelze des Kunststoffs, vorzugsweise Thermoplasten. Der Vorgang der Imprägnierung und Konsolidierung ist deshalb abhängig von den Parametern Temperatur, Druck und Zeit.

Vorzugsweise bedeutet "konsolidiert" im Sinne der vorliegenden Erfindung, dass im als Grundkörper einzusetzenden Faserverbundwerkstoff ein Luftanteil von weniger als 10 Volumen-% vorliegt.

Das Imprägnieren der Fasern hängt von der Viskosität des einzusetzenden Kunststoffs, insbesondere Thermoplasten, ab. Da Thermoplastschmelzen im Allgemeinen hohe Viskositäten aufweisen, ist das Imprägnieren der Fasern abhängig von hohen Drücken und/oder Temperatur und der Zeit.

Zur Erzielung optimaler mechanischer Eigenschaften ist neben einer Konsolidierung eine möglichst vollständige Imprägnierung der Filamente mit dem Thermoplast der Matrix erforderlich. Beide Eigenschaften lassen sich durch die Bestimmung mechanischer Kennwerte messen, insbesondere der Zugfestigkeit. Zur Ermittlung der Zugfestigkeit dient der Zugversuch, ein quasistatisches, zerstörendes Prüfverfahren, im Falle von Kunststoffen nach ISO 527-4 oder -5. Vorzugsweise einzusetzende thermoplastische Faserverbundwerkstoffe weisen deshalb in Abhängigkeit von der einzusetzenden Faser Zugfestigkeiten im Bereich von 250 bis 2000 MPa nach ISO 527-4 oder -5 auf.

In der voll-imprägnierten und voll-konsolidierten Form besitzen die Fasern des bzw. der Flächengebilde(s) die Aufgabe, dem Grundkörper (1) Festigkeit und Steifigkeit zu verleihen, wohingegen die Kunststoffmatrix im Vergleich zu den eher spröden Fasern die Bruchdehnung des Gesamtverbundes positiv beeinflusst. Durch eine unterschiedliche Orientierung der Fasern, insbesondere in Form eines Gewebes, kann speziellen Lastfällen entgegen gewirkt werden (Anisotropie). Eine Isotropie kann zum Beispiel durch die Nutzung eines Wirrfaservlieses erreicht werden.

Neben dem Grundkörper (1) gemäß Fig. 1 wird ferner ein Holzfurnier (2) bereitgestellt. Ein Ausführungsbeispiel eines solchen Holzfurniers zeigt Fig. 2. Das Holzfurnier (2) gemäß Fig. 2 umfasst eine Holzschicht (21) und eine rückseitige, textile Flächengebildelage (22).

Zusätzlich kann ein erfindungsgemäß einzusetzendes Holzfurnier über weitere Schichten verfügen, vorzugsweise wenigstens eine vorderseitige Folienschicht (23), wie in Fig. 3 dargestellt. Alle Schichten bis auf die Holzschicht (21) sind dabei optional.

In Fig. 2 und Fig. 3 ist die Flächengebildelage (22), vorzugsweise aus einem Gewebe und/oder einem Gelege und/oder einer Matte und/oder einem Vlies und/oder Gewirke und/oder Geflecht und/oder unidirektional ausgerichtetem Flächengebilde, vorzugsweise UD-Tape (UD = unidirektional), auf die Holzschicht (21) einseitig aufgebracht. Eine solche Flächengebildelage (22) bildet während der Verarbeitung die dem Grundkörper (1) zugewandte Oberfläche des Holzfurniers und schützt und stabilisiert die Holzschicht (21) bei der Verarbeitung des Holzfurniers zur Herstellung eines erfindungsgemäßen Kunststoffformkörpers.

Die Folienschicht (23) ist bevorzugt als transparente Schicht ausgebildet, insbesondere aus der Gruppe der Polyolefine, Vinylpolymerisate, Polyacrylate, Polyamide, Polyurethane, Polyharnstoffe, Polyimide, Polyester, Polyether, Polystyrole, Polyhydantoine, Polyphenylenoxide, Polyarylensulfide, Polysulfone, Polycarbonate, PMMA, SAN, TPO, TPU und POM.

Bevorzugte Vinylpolymerisate sind auszuwählen aus der Gruppe Polyvinylhalogenide, Polyvinylester, Polyvinylether.

Bevorzugte Polyamide sind auszuwählen aus der Gruppe PA 66, PA 6 und PA 12.

Besonders bevorzugt wird wenigstens ein Thermoplast aus der Gruppe PA66, PA 6, PA 12, PPA, PP, PPS, TPU und PC für den Spritzguss ausgewählt.

Ganz besonders bevorzugt wird wenigstens ein Thermoplast aus der Gruppe TPU, PA 6 und ausgewählt.

Eine solche Folienschicht (23) bildet im fertigen Kunststoffformkörper bevorzugt eine äußere Oberfläche aus und dient damit der Versiegelung der Holzschicht (21), um diese insbesondere vor mechanischen und/oder chemischen und/oder Witterungseinflüssen zu schützen.

Nach dem Aufbringen des Holzfurniers (2) auf den Grundkörper (1) werden diese im Verfahrensschritt iv) miteinander verbunden.

Das in Fig. 2 gezeigte Ausführungsbeispiel des Holzfurniers (2) ist eine von vielen erfindungsgemäßen Ausführungsformen. Es sind auch andere Schichtabfolgen und Schichtzusammensetzungen möglich, insbesondere mehrschichtige Aufbauten sowie Aufbauten, bei denen einzelne Schichten nur partiell aufgebracht sind.

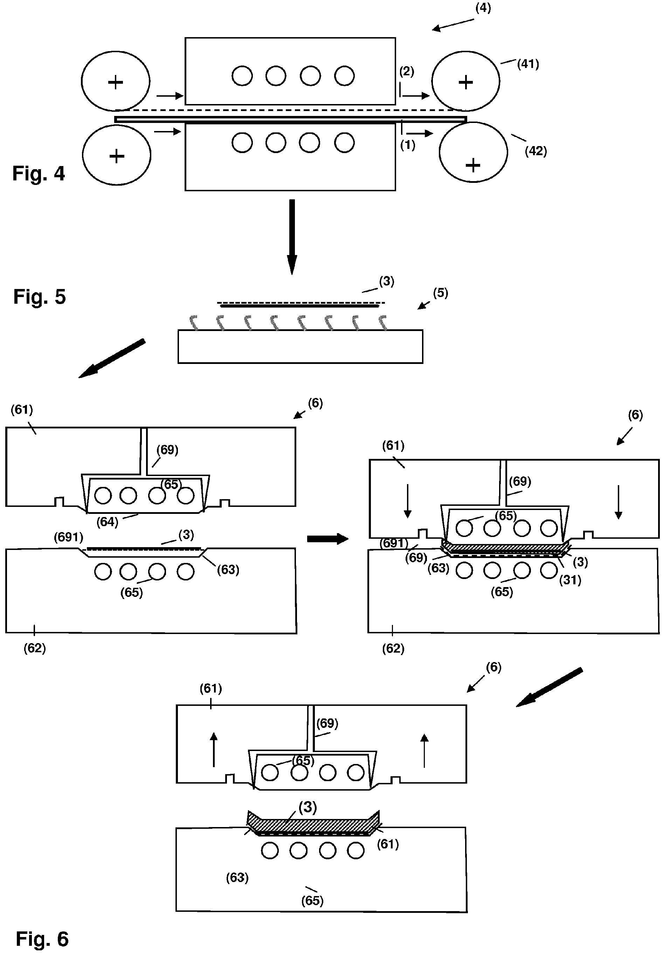

In Fig. 4 ist ein Ausführungsbeispiel eines Verfahrensablaufs zum Herstellen von holzfurnierbeschichteten, erfindungsgemäßen Kunststoffformkörpern (3) dargestellt.

Das Holzfurnier (2) wird dazu mit dem Grundköper (1) stoffschlüssig miteinander verbunden. Vorzugsweise erfolgt das Verbinden kontinuierlich. Vorzugsweise wird das Verbinden bei Temperaturen angewandt, die in einem Temperaturbereich von 0°C bis 50°C, bevorzugt in einem Temperaturbereich von 10°C bis 30°C, höher liegen, als der Schmelzpunkt bzw. die Glasübergangstemperatur des für die Matrix des Grundkörpers eingesetzten Kunststoffs. Es entsteht ein Kunststoffformkörper (3). Erfolgt das Aufbringen des Holzfurniers (2) auf den Grundkörper (1) vor dem Aufheizen, so kann der Aufheizschritt zudem genutzt werden, eine feste Verbindung zwischen dem Holzfurnier (2) und dem Grundkörper (1) herzustellen. Bei einem derart vorfixierten Holzfurnier (2) kann dann auf separate Halteelemente für das Holzfurnier (2) im Formwerkzeug (5) verzichtet werden, so dass sich die Handhabung von Holzfurnier (2) und Grundkörper (1) vereinfacht.

In Fig. 5 wird der Grundkörper (1) zunächst in einer Heizvorrichtung (5) einseitig auf der dem Holzfurnier (2) abgewandten Seite, aufgeheizt. Bevorzugt erfolgt dies durch Infrarotbestrahlung, Kontaktheizung, in einem Umluftofen oder innerhalb eines Formwerkzeugs (6) selbst. Hierdurch wird einfach und energieeffizient eine gleichmäßige Aufheizung des Grundkörpers (1) sichergestellt.

In der Verfahrensweise gemäß Fig. 5 ist es bevorzugt, wenn der Grundkörper (1) auf eine Temperatur aufgeheizt wird, die um einen Bereich von 0°C bis 100°C, bevorzugt um einen Bereich von 10°C bis 50°C, größer ist, als der Schmelzpunkt des für die Kunststoffmatrix des Faserverbundkunststoffs eingesetzten Kunststoffs, vorzugsweise Thermoplasten. Dies ermöglicht eine zuverlässige Umformung des Grundkörpers im nachfolgenden Verfahrensschritt und ein gleichmäßiges Fließen der erweichten Kunststoffmatrix.

Weiter ist es dabei vorteilhaft, wenn der Grundkörper (1) auf eine Temperatur im Bereich von 100°C bis 300°C, bevorzugt im Bereich von 160°C bis 280°C, weiter bevorzugt im Bereich von 200°C bis 250°C aufgeheizt wird. Die genauen Temperaturen richten sich nach der jeweiligen Kunststoffmatrix des für den Grundkörper eingesetzten Kunststoffs.

Nach dem Aufheizen wird der Grundkörper (1) in das Formwerkzeug (6) überführt. Dies kann vorzugsweise mittels wenigstens eines Industrieroboters geschehen, der mit einem Greifer, einer Ansaugvorrichtung oder dergleichen als Manipulator versehen ist.

Das Formwerkzeug (6) umfasst zwei Werkzeughälften (61), (62), die gegeneinander beweglich sind. Die Werkzeughälften (61), (62) bilden Umformflächen (63), (64) aus, die die Endkontur des umgeformten Grundkörpers (1) definieren. Ferner umfasst das Formwerkzeug Temperierkanäle (65), mittels denen die Temperatur der Werkzeughälften eingestellt werden kann. Vorzugsweise erfolgt die Temperatureinstellung, wie in Fig. 5 dargestellt, mittels Temperiermittelkanäle.

Nach dem Einlegen des wenigstens einen Grundkörpers (1) und des wenigstens einen Holzfurniers (2) werden Grundkörper (1) und Holzfurnier (2) umgeformt, vorzugsweise zwischen den zwei Werkzeughälften (61), (62) des Formwerkzeugs (6), besonders bevorzugt durch hydraulische, pneumatische oder elektrische Druckbeaufschlagung. Hierdurch wird eine exakte Kontrolle von Druck und Umformgrad während des Umformvorgangs ermöglicht, so dass ein erfindungsgemäßer Kunststoffformkörper (3) mit hoher Material- und Oberflächenqualität erhalten wird.

Vorzugsweise wird das Formwerkzeug (6) während des Umformens über die Temperierkanäle (65) temperiert. Dies vermeidet ein zu schnelles Abkühlen des Grundkörpers an der Oberfläche während des Umformens.

Dabei ist es bevorzugt, wenn das Formwerkzeug (6) während des Umformens isotherm auf eine Temperatur im Bereich von 40°C bis 180°C, bevorzugt im Bereich von 70°C bis 150°C, weiter bevorzugt im Bereich von 80°C bis 120°C temperiert wird.

Alternativ kann das Formwerkzeug (6) während des Umformens variotherm temperiert werden, insbesondere mit einer Temperaturführung von 0K bis 250K unter Schmelztemperatur eines als Matrix des Grundkörpers einzusetzenden Kunststoffs, mit einem Aufheizgradienten von 1 K/s 30K/s. Eine solche Temperaturführung im Werkzeug gewährleistet ein Imprägnieren des Holzfurniers.

Bei dieser Variante kann die Temperaturführung an den Umformprozess angepasst werden, so dass Verzüge oder eine Verschlechterung der Oberflächenqualität, beispielsweise durch ungleichmäßige Schrumpfung oder Ausdehnung des Werkstücks, vermieden werden.

Nach dem Umformen kann in einer Ausführungsform ferner noch eine Kunststoffstruktur (31) an das Kunststoffformteil (3) vollflächig hinterspritzt oder partiell angespritzt oder den Randbereich versiegelnd umspritzt werden. Hierfür umfasst das Formwerkzeug wenigstens ein Angusssystem (69). Beispiele für die Gestaltung des Angusssystems sind in Fig. 6 dargestellt.

In beiden Fällen wird hierbei schmelzflüssige Kunststoffmasse durch den wenigstens einen Angusskanal (69) in eine Kavität (691) des Formwerkzeugs (6) geleitet, wo sie in Kontakt mit dem Grundkörper (1) zum erfindungsgemäßen Kunststoffformkörper (3) erstarrt.

Hierdurch können zusätzliche Strukturelemente (31) verwirklicht werden, die durch das Umformen allein nicht erzeugt werden können. Ferner ist es so möglich, Kantenbereiche des Grundkörpers (1) zu umspritzen, so dass überstehende Kunststofffasern von der Kunststoffstruktur (31) eingeschlossen werden können. Hierdurch wird ein erfindungsgemäßer Kunststoffformkörper mit besonders glatten Kanten bereitgestellt. Bevorzugt wird zum Spritzgießen eine schmelzflüssige Kunststoffmasse enthaltend wenigstens einen Thermoplasten aus der Gruppe PC, PP, TPU, PA oder eine Mischung daraus verwendet. Die Wahl des angespritzten Kunststoffs richtet sich insbesondere nach dem wesentlichen Kunststoff in der Kunststoffmatrix des Grundkörpers (1). Es ist dabei zweckmäßig, wenn die zumindest eine Kunststoffstruktur (31) aus dem gleichen Kunststoff besteht wie die Kunststoffmatrix des Grundkörpers (1). Vorzugsweise wird ein Thermoplast eingesetzt, der dazu geeignet ist, eine haftfeste Verbindung mit zumindest einem der im Grundkörper (1) enthaltenen Thermoplasten einzugehen. Hierdurch kann eine feste Verbindung zwischen der Kunststoffstruktur (31) und dem Grundkörper (1) sichergestellt werden. Ein haftfester Verbund zeichnet sich dadurch aus, dass die Adhäsionskräfte zwischen Grundkörper und angespritztem Kunststoff im Kunststoffformkörper (3) so groß sind, dass eine Trennung beider nicht zerstörungsfrei gelingt.

Es kann sich in einer weiteren Alternative von Vorteil erweisen, wenn die Kunststoffstruktur (31) mit mindestens zwei Kunststoffen, vorzugsweise Thermoplasten, mittels Spritzgussverfahren durch Kombination der vorgenannten Techniken Hinterspritzen, Anspritzen und Umspritzen, beispielsweise zur Realisierung einer unterschiedlichen Einfärbung bestimmter Bereiche des Kunststoffformkörpers (3) oder zur Integration zusätzlicher Dichtelemente am Kunststoffformkörper (3), erstellt wird.

Es ist dabei bevorzugt, wenn das Spritzgießen bei einer Temperatur im Bereich von 200°C bis 320°C, bevorzugt im Bereich von 240°C bis 290°C, weiter bevorzugt im Bereich von 240°C bis 270°C, erfolgt. Ferner ist es vorteilhaft, wenn das Spritzgießen bei einem Druck im Bereich von 10 bar bis 2000 bar, bevorzugt im Bereich von 200 bar bis 1500 bar, weiter bevorzugt im Bereich von 500 bar bis 1300 bar, erfolgt.

Druck und Temperatur des Spritzgussvorgangs richten sich dabei nach der Art der verwendeten Kunststoffmasse, sowie nach der Geometrie der zu erzeugenden Kunststoffstruktur (31).

Es ist ferner bevorzugt, wenn der Kunststoffformkörper (3) nach dem Umformen und/oder nach dem Spritzgießen auf eine Temperatur im Bereich von 150°C bis 0°C abgekühlt wird, insbesondere mit einer Abkühlrate von 1 K/s bis 30 K/s.

Hierdurch wird eine kontrollierte Erstarrung der angespritzten Kunststoffstruktur (31) bzw. des gesamten Kunststoffformkörpers (3) erzielt, so dass Verzüge oder dergleichen beim Abkühlen vermieden werden.

Weiterhin ist es bevorzugt, wenn das für den Spritzguss vorgesehene Material der zumindest einen Kunststoffstruktur (31) Zuschlagstoffe, insbesondere Glas-, Carbon- oder Naturfasern, Kupfer, Aluminiumoxid, Graphit, Mittel zur Verbesserung der Fließfähigkeit, UV-Stabilisatoren, Flammschutzmittel, Schaumbildner, Mittel zur Ableitung statischer Aufladung oder zur Ausbildung elektrischer Leitfähigkeitspfade enthält. Solche Zuschlagstoffe können der Kunststoffstruktur (31) zusätzliche visuelle, mechanische, chemische oder funktionale Eigenschaften verleihen.

Es ist weiter bevorzugt, wenn die zumindest eine Kunststoffstruktur (31) einen Kantenbereich des Grundkörpers (1) umschließt. Hierdurch können überstehende Fasern des Grundkörpers (1) in der Kunststoffstruktur (31) eingeschlossen werden, so dass sich eine glatte, optisch und taktil ansprechende Kante des Kunststoffformkörpers (3) ergibt.

Weiterhin ist es bevorzugt, wenn die zumindest eine Kunststoffstruktur (31) Verstärkungselemente, insbesondere Rippenkörper oder Dome, und/oder Befestigungselemente, insbesondere Clipse, Rasthaken, Schnapphaken, Konsolen, Schrauböffnungen, Rastöffnungen, Federn, Nuten oder dergleichen, umfasst. Dies ermöglicht die Verbindung des Kunststoffformkörpers (3) mit weiteren Bauteilen, ohne dass separate Befestigungsmittel notwendig sind und/oder trägt weiter zur mechanischen Stabilisierung des Kunststoffformkörpers (3) bei.

Nach dem Abkühlen der angespritzten Kunststoffstruktur (31) wird der fertige Kunststoffformkörper (3) schließlich entformt. Um ein problemloses Entformen zu ermöglichen, ist es zweckmäßig, wenn Entformungsschrägen des Formwerkzeugs (6) im Bereich der Umformflächen (63), (64) einen Winkel von mehr als 2° aufweisen. Es ist dabei auch zweckmäßig, wenn Innenradien des Formwerkzeugs (6) im Bereich der Umformflächen (63), (64) größer als eine Dicke des Grundkörpers sind. Ferner sind die Außenradien des Formwerkzeugs (6) im Bereich der Umformflächen (63), (64) bevorzugt größer, als die Summe der Innenradien des Formwerkzeugs (6) im Bereich der Umformflächen (63), (64) und der Dicke des Grundkörpers (1).

Es ist ebenfalls vorteilhaft, wenn die Entformungsschrägen des Formwerkzeugs (6) im Bereich der Kavität (691) einen Winkel von mehr als 0,5° aufweisen.

Durch diese geometrischen Parameter wird ein problemloses Entformen des fertigen Kunststoffformkörpers ermöglicht.

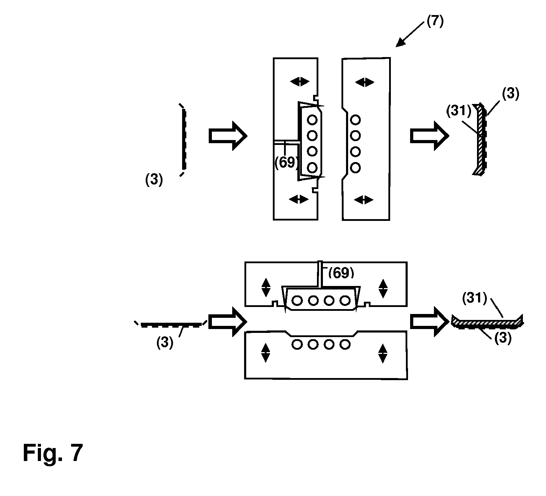

Das Ausführungsbeispiel nach Fig. 7 unterscheidet sich von dem Ausführungsbeispiel nach Fig. 6 nur dadurch, dass das Spritzgießen der Kunststoffstruktur 31 nicht im Formwerkzeug (6) erfolgt. Vielmehr wird der umgeformte Kunststoffformkörper (3) aus dem Formwerkzeug (6) entnommen und in ein separates Spritzgusswerkzeug (7) überführt, wo die Kunststoffstruktur (31) auf die beschriebene Art und Weise angespritzt wird. Dabei kann es sich um ein horizontales oder ein vertikales Werkzeug handeln.

### Bezugszeichenliste

- (1): Grundkörper
- (2): Holzfurnier
- (21): Holzschicht
- (22): Textile Flächengebilde
- (23): (Schutz)Folie
- (3): Kunststoffformkörper
- (31): Kunststoffstruktur
- (4): Heizstrecke
- (41): Abwickler
- (42): Aufwickler
- (5): Heizvorrichtung
- (6): Formwerkzeug
- (61): Werkzeughälfte
- (62): Werkzeughälfte
- (63): Umformfläche
- (64): Umformfläche
- (65): Temperierkanal
- (69): Angusssystem
- (691): Kavität
- (7): Spritzgusswerkzeug

## Patentansprüche

1. Verfahren zur Herstellung eines Kunststoffformkörpers enthaltend
a) wenigstens einen Grundkörper aus einem Faserverbundkunststoff und
b) wenigstens ein Holzfurnier, welches wenigstens einen Oberflächenbereich des Kunststoffformkörpers bildet oder bedeckt,
**dadurch gekennzeichnet, dass** man
i) wenigstens einen Grundkörper aus einem Faserverbundkunststoff bereitstellt,
ii) wenigstens ein Holzfurnier bereitstellt,
iii) den wenigstens einen Grundkörper aufheizt, und
iv) wenigstens einen Bereich des wenigstens einen Grundkörpers mit dem wenigstens einen Holzfurnier miteinander verbindet.

2. Verfahren gemäß Anspruch 1, **dadurch gekennzeichnet, dass** in einem zusätzlichen Verfahrensschritt v) der Kunststoffformkörper aus Verfahrensschritt iv) wenigstens in einem Teilbereich umgeformt wird, vorzugsweise in wenigstens einem Formwerkzeug.

3. Verfahren gemäß Anspruch 2, **dadurch gekennzeichnet, dass** in einem zusätzlichen Verfahrensschritt vi) zumindest eine Kunststoffstruktur an den Kunststoffformkörper durch Spritzgießen vollflächig, partiell oder umlaufend angeformt wird.

4. Verfahren gemäß Anspruch 3, **dadurch gekennzeichnet, dass** Verfahrensschritt v) zusammen mit Verfahrensschritt vi) durchgeführt wird, vorzugsweise zeitgleich.

5. Verfahren gemäß einem der Ansprüche 1 bis 4, **dadurch gekennzeichnet, dass** das Holzfurnier als Rollenware bereitgestellt wird.

6. Verfahren nach einem der vorhergehenden Ansprüche 1 bis 5, **dadurch gekennzeichnet, dass** der Grundkörper als plattenförmiges Halbzeug bereitgestellt wird.

7. Verfahren nach einem der vorhergehenden Ansprüche 1 bis 6, **dadurch gekennzeichnet, dass** der Grundkörper durch Infrarotbestrahlung, Kontaktheizung, in einem Umluftofen oder innerhalb des Formwerkzeugs aufgeheizt wird.

8. Verfahren gemäß Anspruch 7, **dadurch gekennzeichnet, dass** der Grundkörper auf eine Temperatur aufgeheizt wird, die um 0°C bis 100°C, bevorzugt um 10°C bis 50°C, größer ist als ein Schmelzpunkt oder eine Glasübergangstemperatur einer Kunststoffmatrix des Grundkörpers.

9. Verfahren nach einem der Ansprüche 7 oder 8, **dadurch gekennzeichnet, dass** der Grundkörper auf eine Temperatur im Bereich von 100°C bis 300°C, bevorzugt zwischen 160°C und 280°C, weiter bevorzugt zwischen 200°C und 250°C aufgeheizt wird.

10. Verfahren gemäß einem der Ansprüche 1 bis 9, **dadurch gekennzeichnet, dass** der wenigstens eine Grundkörper und das wenigstens eine Holzfurnier durch hydraulische, pneumatische oder elektrische Druckbeaufschlagung zwischen zwei Werkzeughälften wenigstens eines Formwerkzeugs umgeformt werden.

11. Verfahren gemäß einem der Ansprüche 1 bis 10, **dadurch gekennzeichnet, dass** wenigstens ein Formwerkzeug isotherm auf eine Temperatur im Bereich von 40°C bis 180°C, bevorzugt im Bereich von 70°C bis 150°C, weiter bevorzugt im Bereich von 80°C bis 120°C, beheizt wird

12. Verfahren nach einem der Ansprüche 1 bis 11, **dadurch gekennzeichnet, dass** das Formwerkzeug variotherm temperiert wird, insbesondere mit einer Temperaturführung zwischen 0K und 250K unterhalb der Schmelztemperatur eines als Matrix des Grundkörpers einzusetzenden Kunststoffs, mit einem Aufheiz- oder Abkühlgradienten von 1 K/s bis 30K/s.

13. Kunststoffformkörper enthaltend
a) wenigstens einen Grundkörper aus Faserverbundkunststoff und
b) wenigstens ein Holzfurnier, welches wenigstens einen Oberflächenbereich des Kunststoffformkörpers bildet oder bedeckt.

14. Kunststoffformkörper gemäß Anspruch 13, **dadurch gekennzeichnet, dass** der wenigstens eine Grundkörper zumindest eine Flächengebildelage aus Endlosfasern und/oder Langfasern und gegebenenfalls Kurzfasern in der Kunststoffmatrix aufweist.

15. Erzeugnisse, vorzugsweise Kraftfahrzeuginnenausstattungen oder Möbel enthaltend wenigstens einen Kunststoffformkörper gemäß der Ansprüche 13 oder 14.

16. Verwendung der Kunststoffformkörper gemäß der Ansprüche 13 oder 14 zum Einsatz in Technologien, wo es auf Leichtbau als auch auf ansprechende Ästhetik, insbesondere auf Basis von natürlichem Holz, ankommt, insbesondere für Kraftfahrzeuginnenaustattungen oder in der Möbelindustrie.
